# EUROPEAN PATENT APPLICATION

(11) **EP 1 968 329 A2**
(43) Date of publication of application: **10.09.2008**
(21) Application number: 07122602.1
(22) Date of filing: 07.12.2007
(51) Int. Cl.: H04N 13/04

(54) **Three-dimensional image display apparatus and method for enhancing stereoscopic effect of image**

(30) Priority: 16.02.2007 KR 20070016818
(71) Applicant: Samsung Electronics Co., Ltd., Suwon-si, Gyeonggi-do 442-742 (KR)
(72) Inventor: Kim, Tae-hee, Gyeonggi-do (KR); Choi, Jae-young, Jeollabuk-do (KR)
(74) Representative: Perkins, Dawn Elizabeth

(57) **Abstract**

A three-dimensional (3D) image display apparatus for enhancing a stereoscopic effect of an image is provided. The 3D image display apparatus includes a disparity estimator which estimates the disparity between a first image and a second image which are obtained by photographing the same object from different angles; a computing unit which computes the adjustment disparity between the first image and the second image using a histogram obtained by computing the frequency of the estimated disparity; and an output unit which applies the computed adjustment disparity to the first image and the second image and outputs the first image and the second image in which the disparity is adjusted. Therefore, the input disparity between the first image and the second image is adjusted, and an image with an enhanced stereoscopic effect may be provided to a user.

## Description

Apparatuses and methods consistent with the present invention relate to displaying a three-dimensional image, and more particularly, to displaying a three-dimensional image to enhance a stereoscopic effect of the image.

When people see an object with two eyes, there is a difference between the horizontal position of an image viewed by the left eye and the horizontal position of the image viewed by the right eye. This distance corresponding to an interval between the two eyes, and is referred to as a binocular disparity. In this situation, if an image identical to the actual image is observed with two eyes, people can experience a stereoscopic effect when viewing the image. Accordingly, when preparing an image, two cameras having the same characteristics are separated at a distance corresponding to a binocular disparity, such as approximately 65mm, and perform photographing operations. Then an image photographed by a left camera is viewed only through the left eye, and an image photographed by a right camera is viewed only through the right eye. Accordingly it is possible to prepare a three-dimensional (3D) image. In this situation, if the image photographed by the left camera is moved to the right in order to adjust the disparity, the image may appear to project from a screen. Additionally, if the image photographed by the right camera is moved to the left, the image may appear to be behind the screen. Accordingly, the stereoscopic effect of an image can be adjusted by changing the disparity adjustment.

Even if a 3D image is prepared using a binocular camera or computer graphics, the stereoscopic effect of the image may appear unclear depending on the characteristics of an apparatus for displaying the 3D image. In other words, it is hard for a user to experience the stereoscopic effect due to a difference between the preparation environment of the 3D image and the display environment.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides an apparatus and a method for displaying a 3D image which enable an image to have an enhanced stereoscopic effect by adjusting the disparity between a first image and a second image using a histogram generated by estimating the disparity between the first and second images.

According to an aspect of the present invention, there is provided a 3D image display apparatus comprising a disparity estimator which estimates the disparity between a first image and a second image which are obtained by photographing the same object from different angles; a computing unit which computes the adjustment disparity between the first image and the second image using a histogram obtained by computing the frequency of the estimated disparity; and an output unit which applies the computed adjustment disparity to the first image and the second image and outputs the first image and the second image in which the disparity is adjusted.

The computing unit may comprise a first generator which checks the number of pixels having the same disparity among pixels of the first image and the second image to generate the histogram representing the frequency for each disparity; a second generator which generates a cumulative density histogram by cumulatively adding the values of the generated histogram; and the adjustment disparity computing unit which sets the relation between the input disparity and the adjustment disparity, using the average value of the cumulative density histogram and the minimum and maximum values of the disparity, and computes the adjustment disparity based on the set relation.

The adjustment disparity computing unit may set the relation between the input disparity and the adjustment disparity. The relation may be represented by a first straight line graph which connects the minimum value of the adjustment disparity to a first point set between the average value of the cumulative density histogram and the minimum value of the disparity, a second straight line graph which connects the maximum value of the adjustment disparity to a second point set between the average value of the cumulative density histogram and the maximum value of the disparity, and a third straight line graph which connects the first point to the second point and has a slope of 1.

The apparatus may further comprise an input unit which receives a user selection signal. The adjustment disparity computing unit may change the positions of the first point and the second point in response to the user selection signal.

The disparity estimator may search for matching points in the first image and the second image, and estimate the disparity between the searched points.

According to another aspect of the present invention, there is provided a 3D image display method comprising estimating the disparity between a first image and a second image which are obtained by photographing the same object from different angles; computing the adjustment disparity between the first image and the second image using a histogram obtained by computing the frequency of the estimated disparity; and applying the computed adjustment disparity to the first image and the second image and outputting the first image and the second image in which the disparity is adjusted.

The computing may comprise checking the number of pixels having the same disparity among pixels of the first image and the second image to generate the histogram representing the frequency for each disparity; generating a cumulative density histogram by cumulatively adding the values of the generated histogram; and setting the relation between the input disparity and the adjustment disparity using the average value of the cumulative density histogram and the minimum and maximum values of the disparity, and computing the adjustment disparity based on the set relation.

The computing the adjustment disparity may comprise setting the relation between the input disparity and the adjustment disparity. The relation may be represented by a first straight line graph which connects the minimum value of the adjustment disparity to a first point set between the average value of the cumulative density histogram and the minimum value of the disparity, a second straight line graph which connects the maximum value of the adjustment disparity to a second point set between the average value of the cumulative density histogram and the maximum value of the disparity, and a third straight line graph which connects the first point to the second point and has a slope of 1.

The method may further comprise receiving a user selection signal. The computing may comprise changing positions of the first point and the second point in response to the user selection signal.

The estimating may comprise searching for matching points in the first image and the second image, and estimating the disparity between the searched points.

According to another aspect of the present invention, there is provided a 3D image display apparatus comprising a disparity estimator which checks the disparity between a first image and a second image which are obtained by photographing the same object; and a disparity adjustor which adjusts the stereoscopic effect of the first image and the second image using the disparity checked by the disparity estimator.

The disparity adjustor may check the adjustment disparity corresponding to the checked disparity using a disparity-adjustment disparity matching graph in which the slope of each interval is determined separately, and apply the checked adjustment disparity to the first image and the second image to adjust the stereoscopic effect.

The disparity adjustor may change the range and slope of each interval in the matching graph in response to a user selection signal.

According to another aspect of the present invention, there is provided a 3D image display method comprising checking the disparity between a first image and a second image which are obtained by photographing the same object; and adjusting the stereoscopic effect of the first image and the second image using the checked disparity.

The adjusting may comprise checking the adjustment disparity corresponding to the checked disparity using a disparity-adjustment disparity matching graph in which the slope of each interval is determined separately, and applying the checked adjustment disparity to the first image and the second image to adjust the stereoscopic effect.

The adjusting may comprise changing the range and slope of each interval in the matching graph in response to a user selection signal.

The above and/or other aspects of the present invention will be more apparent by describing certain exemplary embodiments of the present invention with reference to the accompanying drawings, in which:
Figure 1 is a block diagram illustrating a 3D image display apparatus according to an exemplary embodiment of the present invention;
Figure 2 is a block diagram illustrating further details of the 3D image display apparatus of Figure 1;
Figure 3A is a view illustrating a histogram relating to a disparity frequency, according to an exemplary embodiment of the present invention;
Figure 3B is a view illustrating a cumulative density histogram relating to a disparity frequency, according to an exemplary embodiment of the present invention;
Figure 4 a illustrating a disparity adjustment graph according to an exemplary embodiment of the present invention;
Figure 5 is a flowchart illustrating a process for displaying a 3D image according to an exemplary embodiment of the present invention; and
Figure 6 is a flowchart illustrating a process for displaying a 3D image according to another exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as the detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

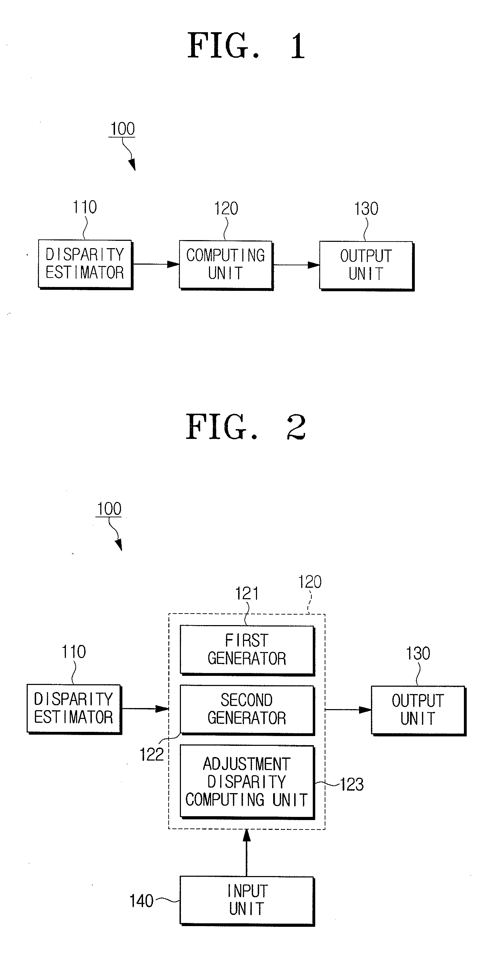

Figure 1 is a block diagram illustrating a 3D image display apparatus 100 according to an exemplary embodiment of the present invention. In Figure 1, the 3D image display apparatus 100 comprises a disparity estimator 110, a computing unit 120, and an output unit 130.

The disparity estimator 110 estimates a disparity between a first image and a second image generated by photographing the same object from different angles. The first image and the second image refer to images obtained by photographing the same object using two imaging devices which are separated at a distance corresponding to the binocular disparity, for example, approximately 65mm. One of the first image and the second image may be a left image which is photographed on the left side, and the other may be a right image which is photographed on the right side. The disparity estimator 110 compares the left image to the right image, and estimates the disparity between matching points in the left and right images.

The computing unit 120 computes the adjustment disparity between the first image and the second image, using a histogram obtained by computing the frequency of the disparity estimated by the disparity estimator 110. Here, the frequency of the estimated disparity indicates the number of times that the same disparity occurs between the first image and the second image. The computing unit 120 computes (-) and (+) adjustment disparities between the first image and the second image, using the histogram relating to the frequency of the disparity.

The output unit 130 applies the adjustment disparity computed by the computing unit 120 to the first image and the second image, and outputs the first image and the second image in which the disparity is adjusted. In other words, the stereoscopic effect of the first image and the second image is adjusted by adjusting the disparity between the first image and the second image based on the computed adjustment disparity, and the first image and the second image are then output. If the disparity between the first image and the second image is completely adjusted, the output part 130 may combine the first image with the second image to generate a single image and output the generated image on a screen.

The computing unit 120 and output unit 130 serve as a disparity adjustor which adjusts the disparity between the first image and the second image. Specifically, the computing unit 120 and output unit 130 check the disparity using a disparity-adjustment disparity matching graph in which the slope of each interval is determined separately, and apply the adjustment disparity corresponding to the checked disparity to the first image and the second image to adjust the stereoscopic effect. Accordingly, it is possible to output an image having a greatly enhanced stereoscopic effect on the screen by adjusting the disparity between the first and second images.

Figure 2 is a block diagram exemplarily illustrating in detail the 3D image display apparatus of Figure 1. In Figure 2, the 3D image display apparatus 100 comprises the disparity estimator 110, the computing unit 120, the output unit 130 and an input unit 140.

The disparity estimator 110 estimates the disparity between the first image and the second image obtained by photographing the same object from different angles. In this situation, the disparity estimator 110 searches for matching points in the first image and the second image, and estimates the disparity between the searched points. Specifically, the disparity may be estimated using a disparity estimation method based on blocks, in which the left image of the first image and the second image is divided into m × n blocks, and points matched to images for each block are searched on the right image of the first image and the second image to estimate the disparity between the matching points. Alternatively, according to another disparity estimation method based on pixels, matching points on the left image and the right image are searched in a pixel unit to estimate the disparity between the matching points.

The input unit 140 receives a user selection signal.

The computing unit 120 computes the adjustment disparity in order to adjust the disparity between the first image and the second image. Specifically, the computing unit 120 comprises a first generator 121, a second generator 122, and the adjustment disparity computing unit 123.

The first generator 121 checks the number of pixels having the same disparity among pixels of the first image and the second image, and generates a histogram representing the frequency for each disparity. For example, if a disparity between pixels at a predetermined point in the first image and the second image is -20, an indication that a disparity of -20 occurs once may be made on the histogram. In the same manner, it is possible to generate a histogram which represents the frequency for each disparity between the first and second images.

The second generator 122 generates a cumulative density histogram by cumulatively adding the values of the histogram generated by the first generator 121.

In order to compute the adjustment disparity used for adjusting the disparity, the adjustment disparity computing unit 123 sets the relation between the input disparity and the adjustment disparity, using the average value of the cumulative density histogram generated by the second generator 122 and the minimum and maximum values of the disparity. Additionally, the adjustment disparity computing unit 123 computes the adjustment disparity based on the set relation. Specifically, the adjustment disparity computing unit 123 generates a first straight line graph which connects the minimum value of the adjustment disparity to a first point set between the average value of the cumulative density histogram and the minimum value of the disparity, and also generates a second straight line graph which connects the maximum value of the adjustment disparity to a second point set between the average value of the cumulative density histogram and the maximum value of the disparity. Furthermore, the adjustment disparity computing unit 123 draws a third straight line graph which has a slope of 1 and connects the first point to the second point. Accordingly, the relation between the input disparity and the adjustment disparity may be set. In this situation, the positions of the first and second points which are set between the minimum value and the maximum value of the disparity based on the average value of the cumulative density histogram may be changed in response to the user selection signal received through the input unit 140.

The first to third graphs are generated in order to compute the adjustment disparity, that is, an output disparity based on the input disparity. The adjustment disparity computing unit 123 may compute (-) and (+) adjustment disparities based on the first to third graphs. If the (-) and (+) adjustment disparities are computed using the first to third graphs, the adjustment disparity computing unit 123 may compute the (-) disparity to be greater than the (-) disparity between the first image and the second image estimated by the disparity estimator 110, and the (+) disparity to be greater than the (+) disparity between the first image and the second image estimated by the disparity estimator 110.

The output unit 130 adjusts the disparity between the first image and the second image using the (-) and (+) adjustment disparities computed by the adjustment disparity computing unit 123, combines the first image with the second image, and outputs the combined image on the screen. Accordingly, an image with a greatly enhanced stereoscopic effect can be displayed on the screen by adjusting the disparity between the first and second images.

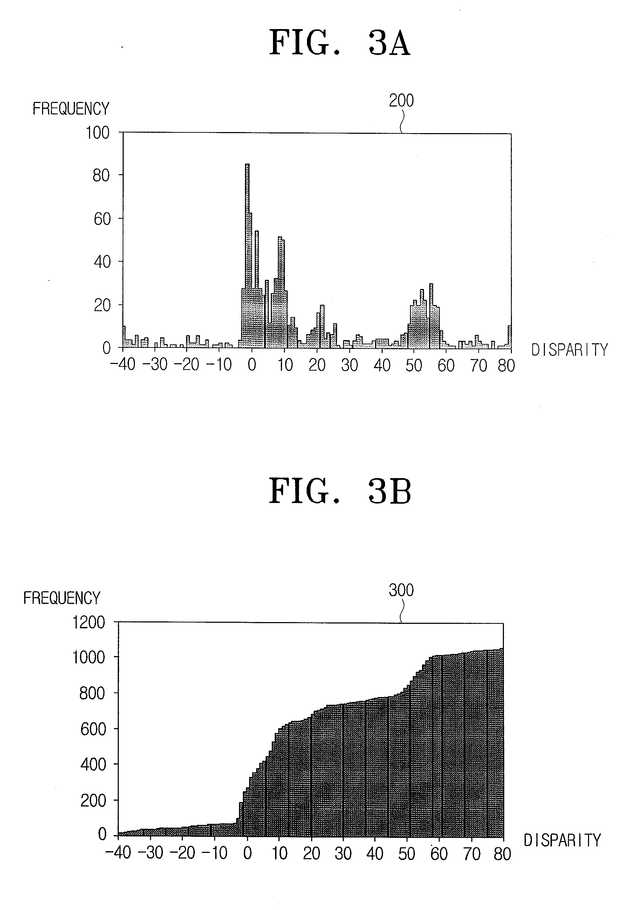

Figure 3A is an exemplary view illustrating a histogram relating to a disparity frequency, according to an exemplary embodiment of the present invention. In Figure 3A, a histogram 200 represents the frequency for each disparity according to the number of pixels having the same disparity among pixels of the first image and the second image, that is, the left and right images. Referring to the histogram 200, a disparity of -40 occurs 10 times among the pixels of the first image and the second image, a disparity of 0 occurs 85 times, and a disparity of 80 occurs 12 times.

Figure 3B is an exemplary view illustrating a cumulative density histogram relating to a disparity frequency, according to an exemplary embodiment of the present invention. In Figure 3B, a cumulative density histogram 300 is obtained by cumulatively adding the values of the histogram 200. In the cumulative density histogram 300, the minimum value of the disparity between the first image and the second image is -40, and the maximum value thereof is 80. Accordingly, the computing unit 120 may check the minimum value and the maximum value of the disparity between the first image and the second image using the histogram 200 and cumulative density histogram 300.

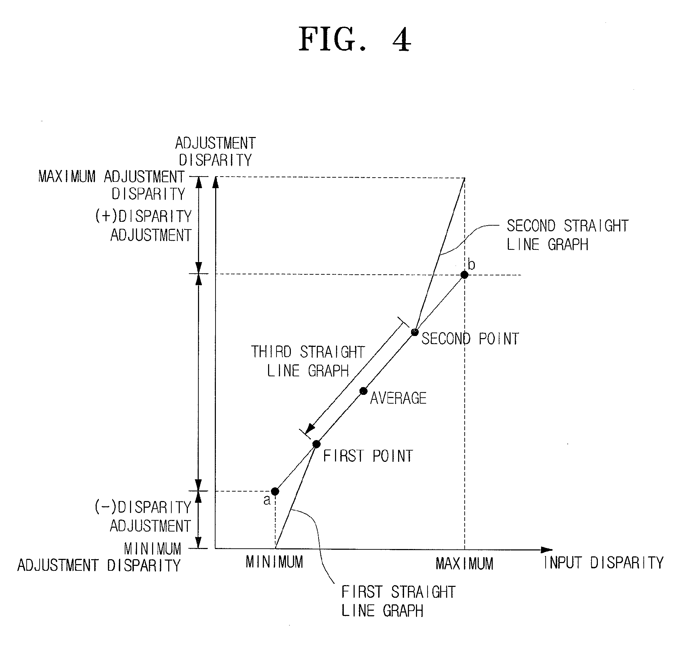

Figure 4 is an exemplary view illustrating a disparity adjustment graph according to an exemplary embodiment of the present invention. In Figure 4, the disparity adjustment graph which represents the relation between the input disparity and the adjustment disparity is a disparity-adjustment disparity matching graph in which the slope of each interval is determined separately. Specifically, the y axis of the disparity adjustment graph indicates the input disparity, and the x axis of the disparity adjustment graph indicates the adjustment disparity, that is, an output disparity between the first and second images.

The disparity adjustment graph is represented by a straight line graph which connects point a to point b in order to output disparities corresponding to the minimum value through the maximum value of the input disparity. The first point may be set between the average value of the cumulative density histogram shown in Figure 3B and the minimum value of the disparity, and the second point may be set between the average value of the cumulative density histogram and the maximum value of the disparity. Accordingly, the first straight line graph connects the minimum value of the adjustment disparity to the first point, and the second line graph connects the maximum value of the adjustment disparity to the second point. Therefore, the first and second straight line graphs each have a slope greater than the slope of the straight line graph which connects point a to point b, so the adjustment disparity may be computed.

If the first straight line graph is used, adjustment disparities may be computed based on the input disparities existing between the input disparity corresponding to the first point and the minimum value of the adjustment disparity on the first straight line graph. Additionally, if the second straight line graph is used, adjustment disparities may be computed based on the input disparities existing between the input disparity corresponding to the second point and the maximum value of the adjustment disparity on the second straight line graph.

The third straight line graph may be generated by connecting the first point to the second point, and may have a slope of 1. In an interval corresponding to the third straight line graph, adjustment disparities may be computed sequentially based on values corresponding to input disparities. The slope of the third straight line graph is not limited to 1, and may be lower than the slopes of the first and second straight line graphs.

The slopes of the first and second straight line graphs may be changed in response to the user selection signal. If a user desires to adjust the entire disparity between the first image and the second image, the user may change the positions of the first and second points to values close to the average value. Additionally, the first and second points may be designed to be set at an appropriate level by a predetermined program when manufacturing the 3D image display apparatus 100.

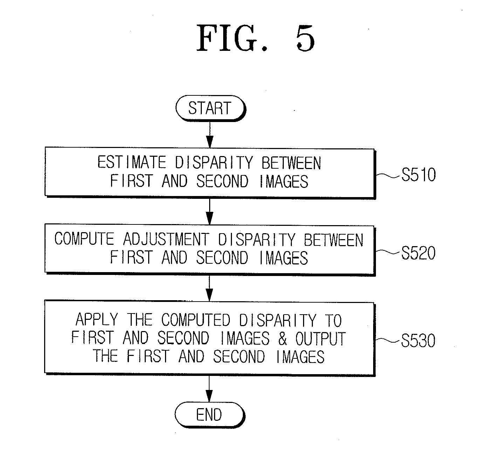

Figure 5 is a flowchart illustrating a process for displaying a 3D image according to an exemplary embodiment of the present invention. In Figure 5, the 3D image display apparatus 100 estimates the disparity between the first image and the second image (S510). The first image and the second image which are obtained by photographing the same object using two imaging devices from different angles may be a left image and a right image, respectively. The 3D image display apparatus 100 may search for matching points in the first image and the second image, and may estimate the disparity between the searched points. The disparity may be estimated using the disparity estimation method based on blocks or the disparity estimation method based on pixels.

The 3D image display apparatus 100 then computes the adjustment disparity between the first image and the second image (S520). In this situation, the adjustment disparity between the first image and the second image may be computed using the histogram relating to the disparity frequency.

Subsequently, the 3D image display apparatus 100 applies the computed adjustment disparity to the first image and the second image, and outputs the first image and the second image in which the disparity is adjusted (S530). If the disparity between the first image and the second image is completely adjusted, the first image and the second image may be combined to generate a single image and output the generated image on a screen. Accordingly, the image may be more stereoscopically output on the screen by adjusting the disparity between the first and second images.

Figure 6 is a flowchart illustrating a process for displaying a 3D image according to another exemplary embodiment of the present invention. In Figure 6, the 3D image display apparatus 100 estimates a disparity between the first image and the second image (S610).

The 3D image display apparatus 100 then generates a histogram representing the frequency of the disparity between the first image and the second image (S620). Specifically, the 3D image display apparatus 100 may check the number of pixels having the same disparity among pixels of the first image and the second image, and generate a histogram representing the frequency for each disparity. Next, the 3D image display apparatus 100 generates a cumulative density histogram by cumulatively adding the values of the histogram (S630).

The 3D image display apparatus 100 sets the relation between the input disparity and the adjustment disparity (S640). Specifically, the relation between the input disparity and the adjustment disparity may be set using the average value of the cumulative density histogram, and the minimum value and the maximum value of the disparity, and may also be represented by a straight line graph for the adjustment disparities matched to the input disparities between the first and second images.

The 3D image display apparatus 100 computes the adjustment disparity based on the relation between the input disparity and the adjustment disparity (S650).

The 3D image display apparatus 100 applies the computed adjustment disparity to the first image and the second image, and outputs the first image and the second image in which the disparity is adjusted (S660). Specifically, the 3D image display apparatus 100 combines the first image and the second image in which the disparity is adjusted to generate a single image and output the generated image on a screen.

As described above, according to the method for adjusting the output disparity between the first image and the second image based on the relation between the input disparity and the adjustment disparity, the (+) disparity and (-) disparity may be adjusted on the first image and the second image, and thus it is possible to display the image on the screen with a greater stereoscopic effect.

In the exemplary embodiments of the present invention as described above, the 3D image display apparatus adjusts the disparity according to the adjustment disparity for the first image and the second image as input. Accordingly, a user can view an image having a greatly enhanced stereoscopic effect.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A three-dimensional image display apparatus comprising:
a disparity estimator (110) configured to estimate a disparity between a first image and a second image, wherein the first image and the second image have been obtained by photographing an object; and
a disparity adjustor (120) configured to adjust a stereoscopic effect of the first image and the second image using the estimated disparity.

2. The apparatus as claimed in claim 1, wherein the first image has been obtained by photographing an object from a first angle, and the second image has been obtained by photographing the object from a second angle and the disparity is a measure of the difference between the first and second angles.

3. The apparatus as claimed in claim 1 or 2, wherein the disparity adjustor comprises a computing unit (120) configured to compute an adjustment disparity between the first image and the second image using a histogram obtained by computing a frequency of the estimated disparity.

4. The apparatus as claimed in any one of the preceding claims, wherein the disparity estimator (110) is configured to estimate the disparity by searching for matching points in the first image and the second image.

5. The apparatus as claimed in claim 1, wherein the disparity adjustor comprises a computing unit (120) comprising:
a first generator (121) configured to determine a number of pixels having a same disparity among pixels of the first image and the second image to generate a histogram representing a frequency for each of a plurality of disparities;
a second generator (122) configured to generate a cumulative density histogram by cumulatively adding values of the generated histogram; and
an adjustment disparity computing unit (123) configured to set a relation between an input disparity and the adjustment disparity, using an average value of the cumulative density histogram and minimum and maximum values of the input disparity, and compute the adjustment disparity based on the set relation.

6. The apparatus as claimed in claim 5, wherein the set relation is represented by a first straight line graph which connects the minimum value of the adjustment disparity to a first point between the average value of the cumulative density histogram and the minimum value of the input disparity, a second straight line graph which connects the maximum value of the adjustment disparity to a second point between the average value of the cumulative density histogram and the maximum value of the input disparity, and a third straight line graph which connects the first point to the second point and has a slope of 1.

7. The apparatus as claimed in claim 5 or 6, further comprising an input unit (140) configured to receive a user selection signal,
wherein the adjustment disparity computing unit (123) is configured to change positions of the first point and the second point in response to the user selection signal.

8. A three-dimensional image display method comprising:
determining a disparity between a first image and a second image, wherein the first image and the second image have been obtained by photographing an object; and
adjusting a stereoscopic effect of the first image and the second image using the determined disparity.

9. The method as claimed in claim 8, wherein the first image has been obtained by photographing object from a first angle, and the second image has been obtained by photographing the object from a second angle, and the disparity is a measure of the difference between the first and second angles.

10. The method as claimed in claim 8 or 9, comprising computing an adjustment disparity between the first image and the second image using a histogram obtained by computing a frequency of the estimated disparity.

11. The method as claimed in claim 8, 9 or 10 comprising searching for matching points in the first image and second image, and determining the disparity between the matching points.

12. The method as claimed in claim 10, wherein the computing comprises:
checking a number of pixels having a same disparity among pixels of the first image and the second image to generate the histogram representing a frequency for each of a plurality of disparities;
generating a cumulative density histogram by cumulatively adding values of the generated histogram; and
setting a relation between an input disparity and the adjustment disparity using an average value of the cumulative density histogram and minimum and maximum values of the input disparity, and computing the adjustment disparity based on the set relation.

13. The method as claimed in claim 12, wherein the set relation is represented by a first straight line graph which connects the minimum value of the adjustment disparity to a first point between the average value of the cumulative density histogram and the minimum value of the input disparity, a second straight line graph which connects the maximum value of the adjustment disparity to a second point between the average value of the cumulative density histogram and the maximum value of the input disparity, and a third straight line graph which connects the first point to the second point and has a slope of 1.

14. The method as claimed in claim 12 or 13, further comprising receiving a user selection signal,
wherein the computing further comprises changing positions of the first point and the second point in response to the user selection signal.
